# EUROPÄISCHE PATENTSCHRIFT

(11) **EP 1 131 542 B1**
(45) Veröffentlichungstag und Bekanntmachung des Hinweises auf die Patenterteilung: **08.05.2002**
(21) Anmeldenummer: 99955973.5
(22) Anmeldetag: 12.11.1999
(51) Int. Cl.: F01M 11/03, B01D 27/08

(54) **FLÜSSIGKEITSFILTER, INSBESONDERE FÜR ÖL ODER KRAFTSTOFF EINER BRENNKRAFTMASCHINE**
LIQUID FILTER MAINLY INTENDED FOR OIL OR FUEL IN AN INTERNAL COMBUSTION ENGINE
FILTRE A LIQUIDE, NOTAMMENT POUR HUILE OU CARBURANT DE MOTEUR A COMBUSTION INTERNE

(30) Priorität: 14.11.1998 DE 19852587
(43) Veröffentlichungstag der Anmeldung: 12.09.2001
(73) Patentinhaber: FILTERWERK MANN & HUMMEL GmbH, 71631 Ludwigsburg (DE)
(72) Erfinder: JAINEK, Herbert, D-74074 Heilbronn (DE)
(74) Vertreter: Voth, Gerhard, Dipl.-Ing.
(86) Internationale Anmeldenummer: EP9908652
(87) Internationale Veröffentlichungsnummer: WO0029724

(56) Entgegenhaltungen:
- EP-A- 0 692 292
- EP-A- 0 874 140
- DE-A- 4 240 656
- DE-A- 19 700 561

## Beschreibung

Die Erfindung betrifft einen Flüssigkeitsfilter, insbesondere für Öl oder Kraftstoff einer Brennkraftmaschine nach der Gattung des Anspruches 1.

Solche Filter sind bekannt, zum Beispiel aus der DE 196 06 616. Sie bestehen aus einem im wesentlichen zylindrischen Filtergehäuse, wobei die auswechselbare Filterpatrone in einem Gehäusesockel Platz findet, auf das ein Schraubdeckel aufgesetzt wird. Insbesondere bei waagerecht eingebauten Filtern tritt beim Wechseln der Filterpatrone jedoch das Problem auf, daß sich in dem Gehäuse ein Ölrest befindet. Um zu verhindern, daß dieser beim Patronenwechsel aus dem Gehäuse herausläuft, ist ein Rücklaufkanal an dem Gehäusesockel vorgesehen, der durch eine gesonderte Öffnung im Kurbelgehäuse der Brennkraftmaschine einen Rücklauf des Restöls aus dem Gehäuse gewährleistet.

Der Nachteil an dieser Bauform ist jedoch, daß im Kurbelgehäuse eine entsprechende Rücklauföffnung vorgesehen sein muß. Daher kann man einen Flüssigkeitsfilter dieser Bauart nicht bei Motoren nachrüsten, die ursprünglich für Einwegfilter vorgesehen waren, da diese eine solche Öffnung nicht aufweisen.

Um die Vorteile einer höheren Wirtschaftlichkeit und Umweltfreundlichkeit auch bei älteren Motoren zu erreichen, wird in der EP 0 692 292 ein Flüssigkeitsfilter vorgeschlagen, bei dem eine verschließbare Ablaßöffnung im Gehäusesockel vorgesehen ist. Um zu gewährleisten, daß sich diese Ablauföffnung bei horizontaler Einbaulage des Filtergehäuses an dessen tiefsten Punkt befindet, wird dieser nicht direkt auf den dafür vorgesehenen Anschlußstutzen geschraubt, sondern von einer schraubbaren Gewindehülse am Einbauort gehalten. Der Nachteil dieser Bauform ergibt sich bei der Erstmontage des Filters. Dieser muß am Einbauort in seinen Einzelteilen zur Verfügung gestellt werden, da die Gewindehülse nur bei offenem Gehäusesockel zugänglich ist. Dadurch wird die Endmontage deutlich erschwert. Im Übrigen besteht die Gefahr, daß empfindliche Einzelteile, insbesondere der Filtereinsatz, beschädigt werden, wodurch die Produktqualität leiden würde.

Es ist daher Aufgabe der Erfindung, einen Flüssigkeitsfilter mit auswechselbarer Patrone zu schaffen, welcher geeignet ist, gewöhnliche Einwegfilter zu ersetzen, welcher bei der Erstmontage als vormontierte Einheit angebracht werden kann und welcher vor dem Wechsel der Filterpatrone ein zuverlässiges Ablassen des im Gehäuseinneren befindlichen Öls gewährleistet, wobei der Flüssigkeitsfilter für Einbaulagen mit im wesentlichen horizontaler Mittelachse oder schräg nach unten weisendem Gehäusedeckel vorgesehen ist.

Diese Aufgabe wird durch die Merkmale des Patentanspruchs 1 gelöst.

Der erfindungsgemäße Flüssigkeitsfilter besteht aus einem im wesentlichen zylindrisch ausgeführten Gehäuse welches durch einen Gehäusesockel und einen Schraubdeckel gebildet wird. Der Gehäusesockel ist mit einem Einlaß und einem Auslaß für das zu filternde Fluid versehen und wird am Einbauort derart aufgesetzt, daß die Durchlässe mit entsprechenden Öffnungen im Einbauort kommunizieren. Insbesondere geschieht dies durch einen Schraubstutzen, auf den der Flüssigkeitsfilter aufgeschraubt werden kann, wobei durch diese Verbindung gleichzeitig der Auslaß realisiert ist. Der Gehäusesockel weist ein Gewinde an seiner Außenwand auf, über daß er mit dem Schraubdeckel verschraubt werden kann. Diese Schraubverbindung wird zum Beispiel durch einen O-Ring abgedichtet. Gehäusesockel und Schraubdeckel bilden zusammen die Aufnahme für die Filterpatrone, die derart im Gehäuse angeordnet ist, daß das zu filternde Fluid die Filterpatrone durchströmt. Weiterhin ist ein Ölablaß im Schraubdeckel vorgesehen, der sich im Bereich des Außenumfangs des Schraubdeckels befindet. Dies kann im Bereich des Zylindermantels des Schraubdeckels oder am Rand seiner Deckelfläche sein.

Wird der Gehäusesockel auf den Gewindestutzen aufgeschraubt, um den Flüssigkeitsfilter am Einbauraum zu montieren, so ist die Winkellage des Flüssigkeitsfilters bezogen auf seine Mittelachse nicht vorhersehbar. Dies gilt daher auch für den Ölablauf. Daher kann es zum Beispiel bei einer Einbaulage des Flüssigkeitsfilters mit horizontaler Mittelachse dazu kommen, daß sich der Ölablaß nicht an der tiefsten Stelle des Gehäuseinnenraums befindet. Um vor einem Wechsel der Filterpatrone dennoch ein vollständiges Ablassen des Restöls im Filtergehäuse zu erreichen, kann der Schraubdeckel gelöst und anschließend soweit gedreht werden, daß sich der Ölablaß an der tiefsten Stelle des Gehäusevolumens befindet. Dabei findet gleichzeitig eine axiale Verschiebung des Schraubdeckels im Gehäusesockel statt. Um dennoch eine zuverlässige Dichtung an der Schraubverbindung zwischen Schraubdeckel und Gehäusesockel zu gewährleisten sind Dichtmittel vorgesehen, die im Bereich dieser Axialverschiebung eine Dichtung zwischen den Gehäuseteilen gewährleisten. Dies kann zum Beispiel durch einen O-Ring geschehen, der beim Öffnen des Schraubdeckels ein Stück auf einer Dichtfläche entlang gleitet. Dabei kann dieser O-Ring gleichzeitig die Dichtfunktion im Betrieb des Ölfilters übernehmen oder es kann zu diesem Zweck eine gesonderte Dichtung vorgesehen sein.

Das erfindungsgemäße Flüssigkeitsfilter ist nicht nur für den Einbau in horizontaler Lage geeignet. Es kann ebenso mit nach unten weisendem Schraubdeckel angebracht werden. Je nach Einbaulage können auch nach dem Ablassen des Restöls geringe Ölrückstände im Filtergehäuse verbleiben, welche jedoch beim Patronenwechsel nicht stören. Dies gilt insbesondere für eine Einbaulage, bei der der Schraubdeckel leicht nach oben gerichtet ist.

Gemäß einer vorteilhaften Weiterbildung des Erfindungsgedankens ist zusätzlich zum Ölablaß eine verschließbare Belüftung am Gehäuse vorgesehen. Diese befindet sich bevorzugt in einem Bereich gegenüber dem Ölablaß. Durch Drehung des Schraubdeckels wandert somit der Ölablaß in einen tiefen Bereich des Gehäuses und die Belüftung in einen hohen Bereich. Wird der Ölablaß dann geöffnet, kann durch die Belüftung Luft in das Gehäuse nachströmen, wodurch der Ablaßvorgang beschleunigt wird.

Eine vorteilhafte Variante der Erfindung sieht vor, den Ölablaß mit einer Ablaßschraube zu versehen. Dies ist ein einfaches Bauteil und trägt dadurch zur Wirtschaftlichkeit des Flüssigkeitsfilters bei.

Eine weitere Variante der Erfindung sieht vor, den Ölablaß und/oder die Belüftung durch Kanäle zu gewährleisten, die durch die Wandungen der Gehäuseteile führen. Diese müssen derart angebracht sein, daß sie durch den montierten Schraubdeckel abgedichtet werden. Soll das Öl abgelassen werden, so wird der Schraubdeckel soweit gedreht, daß die Kanäle freigegeben werden und sich ein Kanal am tiefsten Punkt des Gehäuses befindet. Durch diesen fließt das Öl aus dem Gehäuse. Ist ein zweiter Kanal vorgesehen, der sich gegenüber des anderen befindet, so dient dieser als Belüftung.

Eine besondere Ausführungsform der Erfindung nutzt die sich aufgrund der Geometrie des Gewindes ergebenden Zwischenräume zwischen Gehäusesokkel und Schraubdeckel als Kanal. Sobald die Dichtmittel den Weg nach außen frei geben, kann das Öl durch die Gewindegänge aus dem Gehäuse herausfließen sowie Luft von außen in das Gehäuse nachströmen. Vorteilhafterweise wird als Gewinde ein Sägezahngewinde gewählt, da dieses genügend große Zwischenräume in den Gewindegängen zur Leitung des Öls aufweist. Zusätzlich kann vorteilhafterweise das Gewinde eine axiale Aussparung aufweisen, die den Querschnitt der Kanäle erweitert. Diese Aussparung kann aus einer Abflachung des Gewindes am Schraubdeckel oder auch aus einer Nut bestehen.

Weitere Einzelheiten der Erfindung werden in den Zeichnungen anhand von schematischen Ausführungsbeispielen beschrieben. Hierbei zeigen
- Figur 1: einen Flüssigkeitsfilter im Querschnitt, bei dem der Ölablaß durch eine Ablaßschraube am Rande der Deckelfläche des Schraubdeckels verwirklicht ist,
- Figur 2: den Querschnitt durch einen Flüssigkeitsfilter der Kanäle im Schraubdeckel zur Belüftung und zur Ölableitung aufweist,
- Figur 3: das Detail x aus Figur 2 im Zustand mit geöffnetem Ölablaß,
- Figur 4: einen Flüssigkeitsfilter im Querschnitt mit einer alternativen Anordnung der Kanäle im Schraubdeckel.

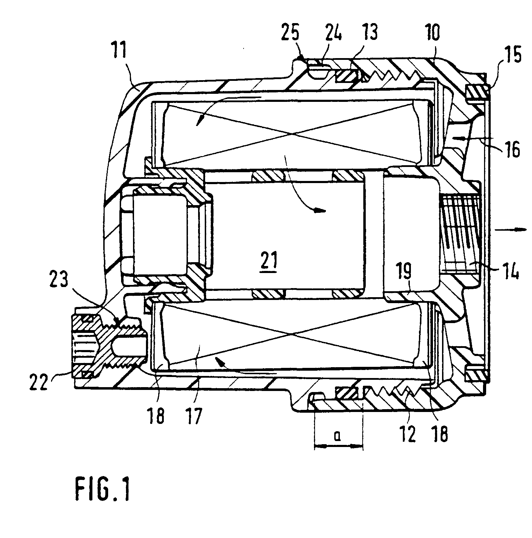

In Figur 1 ist ein Flüssigkeitsfilter dargestellt, dessen Gehäuse aus einem Gehäusesockel 10 und einem Schraubdeckel 11 besteht. Diese Gehäuseteile sind durch ein Gewinde 12 miteinander verschraubt wobei ein Axialanschlag 25 vorgesehen ist, der die Einschraubtiefe des Schraubdeckels 11 im Gehäusesockel 10 begrenzt. Ein O-Ring 13 gewährleistet die Abdichtung des Gehäuseinnenraums gegen die Umgebung. Zur Montage wird der gesamte Flüssigkeitsfilter mit seinem als Gewindebohrung ausgeführten Auslaß 14 auf einen nicht dargestellten Gewindestutzen geschraubt der die Zuleitung des gefilterten Öls in das Kurbelgehäuse einer Brennkraftmaschine gewährleistet. Eine umlaufende Dichtung 15 gewährleistet eine Abdichtung des Gehäusesockels gegen eine nicht dargestellte Gegenfläche des Einbauortes. Während des Betriebs des Flüssigkeitsfilters strömt das zu filternde Fluid, zum Beispiel das Schmieröl einer Brennkraftmaschine, durch einen Einlaß 16 in das Filtergehäuse. Es durchströmt anschließend eine Filterpatrone 17, die mit elastischen Endscheiben 18 dichtend auf einen Stutzen 19 im Gehäusesockel 10 und auf ein Stützrohr 20, welches im Schraubdeckel fixiert ist, gesteckt ist. Die Reinseite des Filtereinsatzes ergibt sich somit durch einen Innenraum 21 in der Filterpatrone. Von dort verläßt das zu filternde Fluid den Flüssigkeitsfilter durch den Auslaß 14.

Die Filterpatrone 17 kann ausgewechselt werden, wenn der Betrieb der Brennkraftmaschine eingestellt wird. Es strömt dann kein Öl durch den Einlaß 16 mehr nach. Allerdings bleibt im Gehäuse eine gewisse Menge Restöls zurück. Um dieses zu entfernen wird der Schraubdeckel 11 in Öffnungsrichtung soweit gedreht, daß eine Ablaßschraube 22 an dessen äußeren Umfang sich an der tiefst möglichen Stelle des Gehäuses befindet. Die Abdichtung des Gehäuses durch den O-Ring 13 in einen Bereich a bleibt dabei gewährleistet. Durch Entfernen der Ablaßschraube 22 wird eine Öffnung 23 freigegeben, durch die das Restöl im Filter abfließen und mit Hilfe eines Gefäßes aufgefangen werden kann. Um das Abfließen zu beschleunigen, kann im Gehäusesockel eine Axialnut 24 vorgesehen werden, die den Dichtring im oberen Teil des Gehäuses überbrückt, sobald der Schraubdeckel genügend weit aus dem Gehäusesockel herausgeschraubt worden ist. Es ist auch möglich den O-Ring in einer Nut im Schraubdeckel 11 und die Axialnut zur Belüftung des Gehäuseinnenraumes im Gehäusesockel 10 vorzusehen.

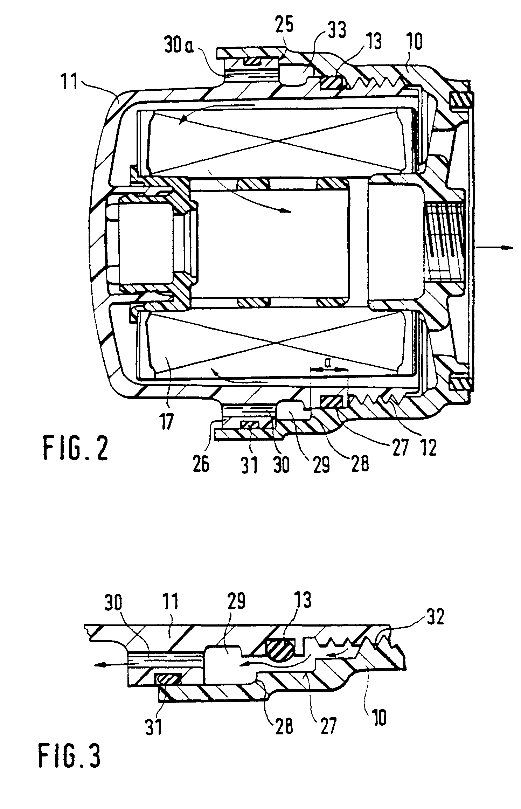

In Figur 2 ist eine alternative Ausgestaltung des Ölablaufes dargestellt. Der grundsätzliche Aufbau des Filters entspricht dem in der Figur 1 dargestellten. Am Schraubdeckel 11 ist jedoch ein radial umlaufender Absatz 26 angegossen, der den Axialanschlag 25 für den Gehäusesockel 10 bildet. Während des Betriebs des Flüssigkeitsfilters wird der Schraubdeckel 11 auf Anschlag in den Gehäusesockel 10 eingeschraubt, wofür das Gewinde 12 vorgesehen ist. Der O-Ring 13 sorgt für eine Abdichtung zwischen den Gehäuseteilen. Der O-Ring ist in einer Ringnut im Schraubdeckel 11 untergebracht und stützt sich im Gehäusesockel 10 auf einer Dichtfläche 27 ab. An die Dichtfläche 27 schließt sich ein Innenabsatz 28 an, der zu einer Durchmessererweiterung des Gehäusesockels bezogen auf den Durchmesser der Dichtfläche 27 führt. Auf diese Weise entsteht ein ringförmiger Sammelraum 29, der während des Betriebes des Flüssigkeitsfilters gegenüber dem Gehäuseinneren durch den O-Ring 13 abgedichtet ist.

Der Entleerungsvorgang des Flüssigkeitsfilters vor dem Wechsel der Filterpatrone 17 geht aus Figur 3 hervor. Der Schraubdeckel 11 wird soweit aufgeschraubt, daß der O-Ring 13 nicht mehr auf der Dichtfläche 27 im Gehäusesockel 10 anliegt, sondern in den Bereich des Innenabsatzes 28 wandert. Auf diese Weise wird der Sammelraum 29 mit dem Gehäuseinneren verbunden, da der O-Ring 13 nicht mehr auf einer Fläche aufliegt und die Gänge des Gewindes 12 eine Leitung des Restöls erlauben. Von dem Sammelraum läuft das Öl durch eine Bohrung 30 im Absatz 26 ab. Eine Zusatzdichtung 31 im Außenumfang des Absatzes 26 gewährleistet im Bereich a während des Ablaufens eine Dichtung zwischen Gehäusesockel 10 und Schraubdeckel 11, so daß das Öl lediglich durch die dafür vorgesehene Bohrung 30 abläuft.

Der Weg des Restöls durch den Ablaufkanal ist durch Pfeile in Figur 3 gekennzeichnet. Um die Durchlaufgeschwindigkeit des Restöls im Bereich des Gewindes 12 zu erhöhen, kann dieses im Umfangsbereich des Schraubdeckels auf Höhe der Bohrung 30 abgeflacht sein. Die so gebildete Aussparung 32 führt zu einer Querschnittserweiterung des Ablaufkanals im Bereich des Gewindes 12.

Wie aus Figur 2 hervorgeht, kann zur Bildung einer Belüftung ein Kanalsystem 33 vorgesehen sein, welches genauso wie in Figur 3 beschrieben ausgebildet ist. Es besteht demnach aus dem Sammelraum 29 und einer zweiten Bohrung 30a, die gegenüber der Bohrung 30 im Absatz 26 vorgesehen ist.

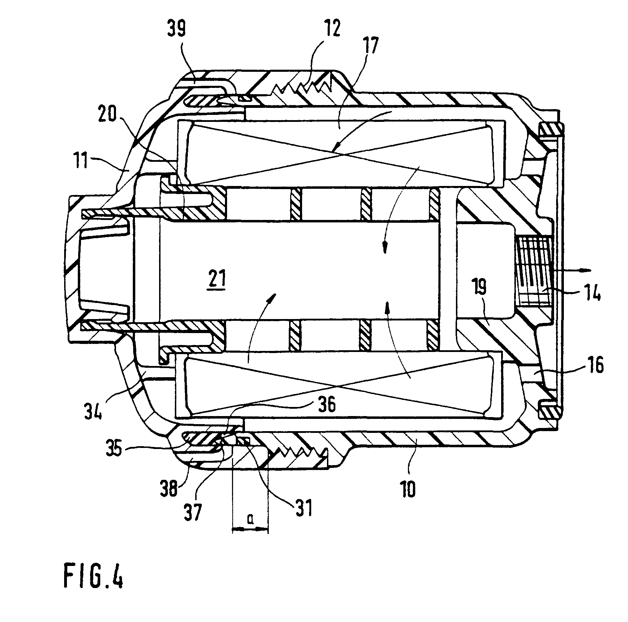

In Figur 4 ist eine alternative Ausgestaltung des Gehäuses für einen Flüssigkeitsfilter dargestellt. Der Schraubdeckel 11 besitzt im Unterschied zu den in den Figuren 1-3 dargestellten Varianten ein Innengewinde und der Gehäusesockel 10 ein Außengewinde zur gegenseitigen Verschraubung. Die Funktion des Flüssigkeitsfilters, bei dem das Öl durch Einlässe 16 in den Gehäuseinnenraum anschließend von außen nach innen durch die Filterpatrone 17 und vom durch die Patrone gebildeten Innenraum 21 durch den Auslaß 14 fließt, entspricht dem in Figur 1 dargestellten Flüssigkeitsfilter. Die Filterpatrone 17 wird durch den Stutzen 19 und das Stützrohr 20 unter zusätzlicher Verwendung von Stützrippen 34 im Gehäuse fixiert.

Die Abdichtung zwischen Gehäusesockel 10 und Schraubdeckel 11 während des Betriebes des Flüssigkeitsfilters wird durch einen Dichtring 35 erreicht, der in einen Ringspalt 36 des Schraubdeckels untergebracht ist. Im montierten Zustand des Schraubdeckels taucht eine Dichtkante 37 des Gehäusesockels 10 in den Ringspalt 36 ein, wo durch eine Verformung des Dichtrings 35 eine Dichtwirkung hergeführt wird.

Zum Wechsel der Filterpatrone 17 wird der Schraubdeckel zunächst soweit aufgeschraubt, daß die Dichtkante 37 den Dichtring 35 nicht mehr berührt. Auf diese Weise werden der Ablaßkanal 38 und der Belüftungskanal 39 freigegeben. Um ein Austreten von Öl durch das Gewinde 12 zu verhindern ist die Zusatzdichtung 31 vorgesehen, die ihre Wirkung im Bereich a entfaltet.

## Patentansprüche

1. Flüssigkeitsfilter, insbesondere für Öl oder Kraftstoff von Brennkraftmaschinen, mit einem im wesentlichen zylindrisch ausgeführten Gehäuse, bestehend aus
- einem Gehäusesockel (10), der mit einem Einlaß (16) und einem Auslaß (14) ausgestattet ist,
- einem lösbaren Schraubdeckel (11), der den Gehäusesockel (10) dichtend verschließt,
- einer auswechselbaren Filterpatrone (17), die durch den Schraubdeckel (11) und den Gehäusesockel (10) fixiert wird,
- einem verschließbaren Ölablaß (22), der im Schraubdeckel (11) angebracht ist,
- Dichtmitteln (13, 31), die zwischen Gehäusesockel (10) und Schraubdeckel (11) dichtend anliegen, wobei die Dichtmittel mit einer Dichtfläche kommuniziert, auf der sie in einem axialen Bereich (a), der Axialverschiebung vom Schraubdeckel (11) im Gehäusesockel (10) durch Drehung um mindestens 360 °, ausgehend von einem Axialanschlag (25) für den montierten Schraubdeckel (11), entlang gleiten,
**dadurch gekennzeichnet, daß** der Flüssigkeitsfilter für Einbaulagen mit im wesentlichen horizontaler Mittelachse oder schräg nach unten vorgesehen ist und dass der verschließbare Ölablass (22) im Bereich des Außenumfanges des Schraubdeckels (11) angeordnet ist, derart, dass er durch Drehung des Schraubdeckels (11) an die tiefste Stelle des Gehäuses gebracht werden kann, um ein vollständiges Ablassen des Restöls im Filtergehäuse vor einem Wechsel der Filterpatrone (17) zu ermöglichen.

2. Flüssigkeitsfilter nach Anspruch 1, **dadurch gekennzeichnet, daß** eine verschließbare Belüftung (24, 33) vorgesehen ist, die den Gehäuseraum des Flüssigkeitsfilters mit der Umgebung verbindet.

3. Flüssigkeitsfilter nach einem der vorherigen Ansprüche, **dadurch gekennzeichnet, daß** der Ölablaß aus einer Ablaßschraube (22) besteht.

4. Flüssigkeitsfilter nach einem der vorherigen Ansprüche, **dadurch gekennzeichnet, daß** der Ölablaß und/oder die Belüftung aus Kanälen (29, 30) in den Wandungen der Gehäuseteile (10, 11) bestehen, die durch Drehung des Schraubdeckels (11), ausgehend von einem Axialanschlag (25) für den montierten Schraubdeckel, freigegeben werden.

5. Flüssigkeitsfilter nach einem der vorherigen Ansprüche, **dadurch gekennzeichnet, daß** die Kanäle (29, 30) teilweise durch ein Gewinde (12) zwischen den Gehäuseteilen (10, 11) gebildet ist.

6. Flüssigkeitsfilter nach Anspruch 5, **dadurch gekennzeichnet, daß** das Gewinde (12) im Schraubdeckel (11) mindestens eine den Kanal (29, 30)vergrößemde Aussparung (32) aufweist.

7. Flüssigkeitsfilter nach einem der vorherigen Ansprüche, **dadurch gekennzeichnet, daß** das Gewinde am Schraubdeckel (11) ein Sägezahngewinde ist.

## Claims

1. Liquid filter, more especially for oil or fuel of internal combustion engines, having a substantially cylindrical housing, comprising
- a housing base (10), which is provided with an inlet (16) and an outlet (14),
- a detachable screw cover (11), which sealingly closes the housing base (10),
- a replaceable filter cartridge (17), which is secured by the screw cover (11) and the housing base (10),
- a closable oil drain (22), which is mounted in the screw cover (11), and
- sealing means (13, 31), which sealingly fit between housing base (10) and screw cover (11), the sealing means communicating with a sealing face, along which it slides within an axial range (a) of the axial displacement of the screw cover (11) in the housing base (10) by rotation through at least 360°, starting from an axial stop member (25) for the mounted screw cover (11),
**characterised in that** the liquid filter is intended for installation dispositions with a substantially horizontal central axis or inclined downwardly, and **in that** the closable oil drain (22) is disposed in the region of the outer periphery of the screw cover (11) in such a manner that it can be brought to the lowest location of the housing by rotation of the screw cover (11), in order to permit the residual oil in the filter housing to be fully drained prior to the filter cartridge (17) being changed.

2. Liquid filter according to claim 1, **characterised in that** a closable venting means (24, 33) is provided, which connects the housing chamber of the liquid filter to atmosphere.

3. Liquid filter according to one of the preceding claims, **characterised in that** the oil drain comprises a drain screw (22).

4. Liquid filter according to one of the preceding claims, **characterised in that** the oil drain and/or the venting means comprise ducts (29, 30) in the walls of the housing members (10, 11), which are exposed by rotating the screw cover (11) from an axial stop member (25) for the mounted screw cover.

5. Liquid filter according to one of the preceding claims, **characterised in that** the ducts (29, 30) are partially formed by a thread (12) between the housing members (10, 11).

6. Liquid filter according to claim 5, **characterised in that** the thread (12) in the screw cover (11) has at least one recess (32), which enlarges the duct (29, 30).

7. Liquid filter according to one of the preceding claims, **characterised in that** the thread on the screw cover (11) is a sawtooth thread.

## Revendications

1. Filtre à liquide, notamment à huile ou à carburant pour moteur à combustion interne, comprenant un boîtier essentiellement cylindrique avec
- un socle (10) muni d'une entrée (16) et d'une sortie (14),
- un couvercle à visser (11), amovible, fermant le socle (10) de manière étanche,
- une cartouche interchangeable (17) bloquée par le couvercle à visser (11) et le socle (10),
- une évacuation d'huile (22), obturable, dans le couvercle à visser (11),
- des moyens d'étanchéité (13, 31) appliqués de manière étanche entre le socle et le couvercle à visser (11), les moyens d'étanchéité communiquant avec une surface d'étanchéité sur laquelle ils glissent dans une zone axiale (a) avec coulissement axial du couvercle à visser (11) dans le socle (10) par rotation d'au moins 360° en partant d'une butée axiale (25) du couvercle (11), à l'état monté,
**caractérisé en ce que**
le filtre à liquide est prévu pour des positions de montage avec un axe central essentiellement horizontal ou légèrement incliné vers le bas et
l'évacuation d'huile obturable (22) est prévue au niveau de la périphérie extérieure du couvercle (11) de façon que, par rotation du couvercle à visser (11), elle vienne au plus bas du boîtier pour permettre de vider complètement de l'huile résiduelle du boîtier de filtre avant le remplacement de la cartouche de filtre (17).

2. Filtre à liquide selon la revendication 1,
**caractérisé par**
une prise d'air obturable (24, 33) reliant le volume du boîtier du filtre avec l'environnement.

3. Filtre à liquide selon l'une quelconque des revendications précédentes,
**caractérisé en ce que**
l'évacuation d'huile est formée par une vis d'évacuation (22).

4. Filtre à liquide selon l'une quelconque des revendications précédentes,
**caractérisé en ce que**
l'évacuation et/ou la prise d'air est formée de canaux (29, 30) dans les parois des parties du boîtier (10, 11) qui sont libérées par la rotation du couvercle à visser (11) à partir d'une butée axiale (25) pour le couvercle à visser, à l'état monté.

5. Filtre à liquide selon l'une quelconque des revendications précédentes,
**caractérisé en ce que**
les canaux (29, 30) sont formés en partie par un filetage (12) entre les parties de boîtier (10, 11).

6. Filtre à liquide selon la revendication 5,
**caractérisé en ce que**
le filetage (12) comporte au moins une découpe (32) agrandissant les canaux (29, 30) dans le couvercle à visser (11).

7. Filtre à liquide selon l'une quelconque des revendications précédentes,
**caractérisé en ce que**
le filetage du couvercle (11) est un filetage en dents de scie.
